(19) Europäisches Patentamt
European Patent Office
Office européen des brevets

(11) **EP 1 877 738 B1**

(12) **EUROPÄISCHE PATENTSCHRIFT**

(45) Veröffentlichungstag und Bekanntmachung des Hinweises auf die Patenterteilung:
**23.12.2015   Patentblatt 2015/52**

(21) Anmeldenummer: **06743363.1**

(22) Anmeldetag: **21.04.2006**

(51) Int Cl.:
**G01S 7/285** *(2006.01)*     **G01S 13/10** *(2006.01)*
**G01S 13/88** *(2006.01)*     **G01F 23/284** *(2006.01)*

(86) Internationale Anmeldenummer:
**PCT/EP2006/061735**

(87) Internationale Veröffentlichungsnummer:
**WO 2006/117297 (09.11.2006 Gazette 2006/45)**

(54) **LAUFZEITMESSVERFAHREN ZUR ERMITTLUNG EINER DISTANZ**

PROPAGATION TIME MEASURING METHOD FOR MEASURING A DISTANCE

PROCEDE DE MESURE SUR LA BASE DU TEMPS DE PROPAGATION POUR DETERMINER UNE DISTANCE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **04.05.2005   DE 102005021358**

(43) Veröffentlichungstag der Anmeldung:
**16.01.2008   Patentblatt 2008/03**

(73) Patentinhaber: **Endress + Hauser GmbH + Co. KG 79689 Maulburg (DE)**

(72) Erfinder: **MICHALSKI, Bernhard 79689 Maulburg (DE)**

(74) Vertreter: **Andres, Angelika Maria Endress+Hauser (Deutschland) AG+Co. KG PatServe Colmarer Strasse 6 79576 Weil am Rhein (DE)**

(56) Entgegenhaltungen:
WO-A-2004/046752     DE-A1- 10 215 798
DE-A1- 19 949 992     US-A1- 2002 109 626

**Beschreibung**

Die vorliegende Erfindung betrifft ein Verfahren zur Ermittlung der Distanz anhand der Laufzeit von hochfrequenten Messsignalen.

Messgeräte werden häufig in der Automations- und Prozesssteuerungstechnik eingesetzt, um eine Prozessvariable wie z.B. Durchfluss, Füllstand, Druck und Temperatur oder eine andersartige physikalische und/oder chemische Prozessgröße in einem Prozessablauf zu ermitteln. Von der Anmelderin werden unter anderem Messgeräte mit der Bezeichnung Micropilot, Prosonic oder Levelflex produziert und vertrieben, welche nach dem Laufzeit-Messverfahren arbeiten und dazu dienen, den Füllstand eines Mediums in einem Behälter zu bestimmen und/oder zu überwachen. Bei der Laufzeit-Messmethode werden beispielsweise Ultraschallwellen über einen Schallwandler ausgesendet, ferner werden Mikrowellen bzw. Radarwellen über eine Antenne ausgesendet oder an einem Wellenleiter, der in das Medium hineinragt, entlang geführt. Die an der Mediumsoberfläche reflektierten Echowellen werden nach der abstandsabhängigen Laufzeit des Signals wieder vom Messgerät empfangen. Aus der halben Laufzeit lässt sich folglich der Füllstand des Mediums in einem Behälter berechnen. Die Echokurve stellt hierbei die empfangene Signalamplitude als Funktion der Zeit dar, wobei jeder Messwert der Echokurve der Amplitude eines in einem bestimmten Abstand an einer Oberfläche reflektierten Echokurvensignals entspricht. Die Laufzeit-Messmethode wird im Wesentlichen in zwei Ermittlungsverfahren eingeteilt: Die Zeitdifferenzmessung, die ein impulsmoduliertes Wellensignal für den zurückgelegten Wegstrecke benötigt; ein weiteres weit verbreitetes Ermittlungsverfahren ist die Bestimmung der Kippfrequenzdifferenz des ausgesendeten kontinuierlichen Hochfrequenzsignals zum reflektierten, empfangenen Hochfrequenzsignal (FMCW - Frequency-Modulated Continuous Wave). Im Weiteren beschränkt man sich nicht auf ein spezielles Ermittlungsverfahren, sondern es wird die übergeordnete Laufzeitmessmethode als Messprinzip verwendet.

Die empfangenen Messsignale beinhalten gegebenenfalls unter realen Messbedingungen zusätzliche Störsignale bzw. Rauschsignale. Diese Störsignale haben verschiedene Ursachen und entstehen auf unterschiedliche Art und Weise, wie z.B.:

- weißes Rauschen, Schrotrauschen
- 1/f-Rauschen bzw. Funkelrauschen
- Phasenrauschen
- Rauschen durch die sequentielle Abtastung mit einer Abtastschaltung
- Rauschen durch Befüll- und Entleervorgänge
- Dispersion der ausgesendeten Wellen
- Schaum- und Ansatzbildung des Mediums
- Luftfeuchte im Behälter
- turbulente Mediumsoberflächen
- elektromagnetische Fremdeinstrahlung.

Nach heutigem Stand der Technik gibt es mehrere Ansätze, die Störsignale bzw. Rauschsignale aus dem Messsignal zu entfernen, da die Störsignale bzw. Rauschsignale die Auswertung und Bestimmung des Füllstandes erschweren oder verhindern können, indem diese das Messsignal überdecken.

Als ein Ansatz die Störsignale aus dem Messsignal zu separieren, wird in der DE 199 49 992 C2 ein Verfahren vorgestellt, das ein Störmaß im Messsignal ermittelt. Aus dem Störmaß und dem Messsignal wird nach einem Algorithmus errechnet, ob eine ausreichende Messgenauigkeit des Messsignals vorliegt. Dieses aktuelle Störmaß wird mit anderen Störmaßen, die in anderen Frequenzbereichen aufgenommenen worden sind und beispielsweise in einem Speicher abgelegten sind, verglichen. Je nach Stärke des Störmaßes und ermittelter Messgenauigkeit des Messsignals wird dann in einen anderen Frequenzbereich gewechselt, bei dem keine so starken Störungen des Messsignals auftreten. In diesem Verfahren wird eine Bewertung der Messgenauigkeit des Messsignals vorgenommen und entschieden, ob dieses Messsignal verwendet werden kann oder ob eine erneute Messung in einem anderen Frequenzbereich geeigneter ist.

Ein anderer Ansatz ist es, die Störsignale bzw. Rauschsignale des abgetasteten zeitgedehnten Messsignals bzw. der Zwischenfrequenz beispielsweise durch die Filterung mit einem Bandpass mit hoher Güte herauszufiltern. Hierzu wir ein schmalbandiger Bandpass mit hoher Güte verwendet, dessen Mittenfrequenz mit der Zwischenfrequenz des abgetasteten Messsignals übereinstimmt. Diese Mittenfrequenz des Bandpasses wird nach heutigem Stand über ein einstellbares Bauteil, z.B. eine Abgleichspule, auf die die eingestellte, festlegte Zwischenfrequenz angepasst.

Da diese Mittenfrequenz des Bandpasses der Filterstufe von den Bauteiltoleranzen des Bandpasses und den Störeinflüssen, wie z.B. den Temperaturverlauf abhängt, ist diese von Charge zu Charge verschieden, so dass der Bandpass zur Einstellung der entsprechenden, gewünschten Mittenfrequenz über ein veränderliches Bauteil (z.B. Abgleichspule) abgeglichen werden muss. Dieser Abgleichvorgang des Bandpasses wird in der Endphase der Produktion der Messgeräte vorgenommen und ist durch die zusätzlichen eingesetzten teuren Bauteile, wie z.B. HF-Abgleichspulen, sowie durch die zusätzliche Arbeitszeit, die für den individuellen Abgleichsvorgangs benötigt wird, sehr kostenintensiv. Des Weiteren kann einer Veränderung der Bauteilcharakteristik und somit einen Drift der Mittenfrequenz des Bandpasses im Betrieb des Messgerätes, z.B. durch Temperatureinflüsse oder Alterung der Bauteile des Bandpasses, nicht ohne einen von Hand ausgeführten Abgleichvorgang des Bandpasses entgegen gewirkt werden. US 2002/109626 A1 beschreibt ein Mikrowellen-Messgerät, das vorzugsweise mit Mikrowellen Bursts arbeitet, und dazu dient einen Messwert zu erzeugen, welcher den Pegel eines Inhalts in einem Behälter repräsentiert.

Es umfasst eine Sende-/Empfangseinheit zum Erzeugen eines pegelabhängigen Zwischenfrequenzsignals, mittels eines Sendesignals und eines Empfangssignals und ein Wandlerelement, das im Betrieb Wellen, insbesondere Impulswellen in den Behälter auskoppelt und von dem Inhalt des Behälters reflektierte Echowellen in den Empfangssignal umwandelt. Das Zwischenfrequenzsignal wird einer Steuereinheit der Pegelmesseinrichtung zugeführt, wo es in Form einer Abtastfolge in einem flüchtigen Datenspeicher gespeichert wird. Auf diese Weise stehen sowohl die Amplitudeninformation als auch die Phaseninformation für die Füllstandsmessung zur Verfügung.

Der Erfindung liegt daher die Aufgabe zugrunde, ein optimiertes, einfaches Verfahren zur Verbesserung der Anpassung der Filter auf die Zwischenfrequenz des zeitgedehnten Messsignals aufzuzeigen, das die Produktionskosten reduziert.

Diese Aufgabe wird erfindungsgemäß durch ein Verfahren zur Ermittlung der Distanz anhand der Laufzeit von hochfrequenten Messsignalen gelöst, wobei zumindest ein mit einer Pulsrepetierfrequenz periodisches Sendesignal ausgesendet und zumindest ein Reflexionsmesssignal empfangen wird, wobei das Sendesignal und das Reflexionsmesssignal mittels einem mit einer Abtastfrequenz erzeugten Abtastsignal in ein zeitgedehntes Zwischenfrequenzsignal mit einer Zwischenfrequenz transformiert werden, wobei das zeitgedehnte Zwischenfrequenzsignal mittels zumindest einem Filter gefiltert wird und ein gefiltertes Echokurvensignal erzeugt wird, wobei die Zwischenfrequenz auf eine Grenzfrequenz und/oder eine Mittenfrequenz des Filters angepasst wird, wobei die Anpassung der Zwischenfrequenz überprüft wird, indem die Signalstärke des Echokurvensignals bewertet wird, und wobei die Signalstärke des gefilterten Zwischenfrequenzsignals durch einen Algorithmus aus dem gefilterten Zwischenfrequenzsignal, durch die Ermittlung der Amplitude des Füllstandsechos und/oder durch die Ermittlung eines Integrals über alle Stützpunkte des gefilterten Zwischenfrequenzsignals bestimmt wird.

Eine vorteilhafte Ausführungsform der erfindungsgemäßen Lösung ist darin zu sehen, dass die Zwischenfrequenz angepasst wird, indem die Pulsrepetierfrequenz und/oder die Abtastfrequenz so variiert wird/werden, dass die Differenzfrequenz zwischen der Pulsrepetierfrequenz und der Abtastfrequenz verändert wird.

In einer besonders bevorzugten Ausführungsform der Lösung der Erfindung ist vorgesehen, dass die Zwischenfrequenz angepasst wird, indem die Pulsrepetierfrequenz und/oder die Abtastfrequenz nach einem iterativen Verfahren variiert werden/wird.

Eine vorteilhafte Ausführungsform der Ausgestaltung des erfindungsgemäßen Verfahrens ist darin zu sehen, dass der Regelungsprozess zur Anpassung der Zwischenfrequenz periodisch oder ereignisgesteuert eingeleitet wird.

Gemäß einer vorteilhaften Ausführungsform des erfindungsgemäßen Verfahrens ist vorgesehen, dass die Signalstärke des Echokurvensignals durch einen Algorithmus aus dem Echokurvensignals, durch die Ermittlung der Amplitude des Füllstandsechos und/oder durch die Ermittlung eines Integrals über alle Stützpunkte des Echokurvensignals bestimmt wird.

Gemäß einer vorteilhaften Ausführungsform des erfindungsgemäßen Verfahrens wird vorgeschlagen, dass ein Transformationsfaktor, der dem Zeitdehnungsverhältnis entspricht, aus dem Verhältnis der Pulsrepetierfrequenz zu einer Differenzfrequenz ermittelt wird.

Gemäß einer vorteilhaften Ausführungsform des erfindungsgemäßen Verfahrens ist vorgesehen, dass der Transformationsfaktor für die weitere Auswertung und Verarbeitung des gefilterten, zeitgedehnten Echokurvensignals übermittelt wird.

Eine weitere vorteilhafte Ausführungsform des erfindungsgemäßen Verfahrens ist, dass Spiegelfrequenzen der Zwischenfrequenz durch ein Tiefpass - Filter und/oder das Abtastungssummensignal aus dem zeitgedehnten Zwischenfrequenzsignal ausgeblendet werden.

Eine sehr vorteilhafte Variante des erfindungsgemäßen Verfahrens ist darin zu sehen, dass Störsignale, insbesondere Rauschen, durch einen Bandpass - Filter aus dem zeitgedehnten Zwischenfrequenzsignal ausgeblendet werden.

Die weiteren Vorteile dieser Erfindung sind, dass die Messgenauigkeit erhöht wird, indem immer das maximal mögliche Echokurvensignal ermittelt und ausgewertet wird und dass ein autonomer Abgleich des Messgerätes bzw. der Messelektronik auf sich ändernde Mess- und Messgerätebedingungen möglich ist, ohne dass Wartungspersonal eingreifen muss. Durch dieses Verfahren ist eine autarke Abstimmregelung der Messelektronik ermöglicht worden, das einer Änderung durch Alterungserscheinungen, Temperaturdrift von Bauteilen und/oder einer Änderung der Messbedingungen, z.B. Messbereichsänderungen, entgegenwirkt.

Die Erfindung wird anhand der nachfolgenden Zeichnungen näher erläutert. Zur Vereinfachung sind in den Zeichnungen identische Teile mit dem gleichen Bezugszeichen versehen worden. Es zeigt:

Fig. 1 ein Ablaufdiagramm des erfindungsgemäßen Laufzeitmessverfahren ausgeführt in dem Regelkreis des Messgerätes,

Fig. 2 ein erstes Ausführungsbeispiel des Blockschaltbilds der Erreger- und Messschaltung des Messgeräts,

Fig. 3 ein zweites Ausführungsbeispiel des Blockschaltbilds der Erreger- und Messschaltung des Messgeräts, und

Fig. 4 ein schematisches Frequenzspektrum des Zwischenfrequenzsignals $S_{ZF}$ nach der sequentiellen Abtastung mit entsprechenden Filtern.

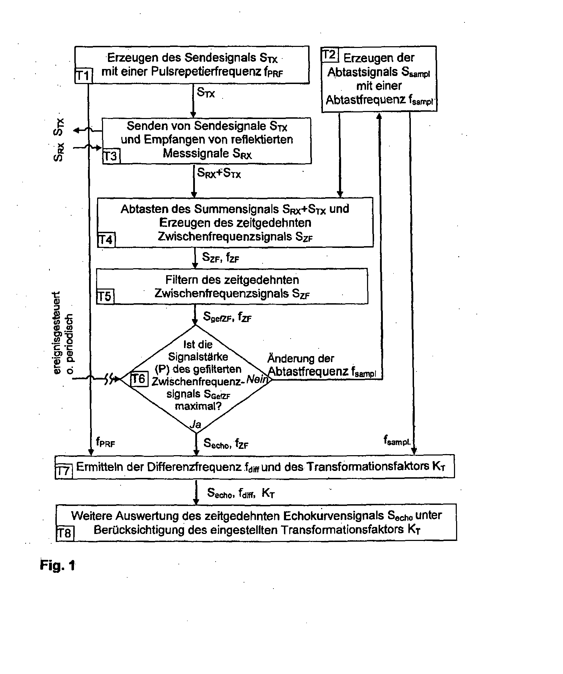

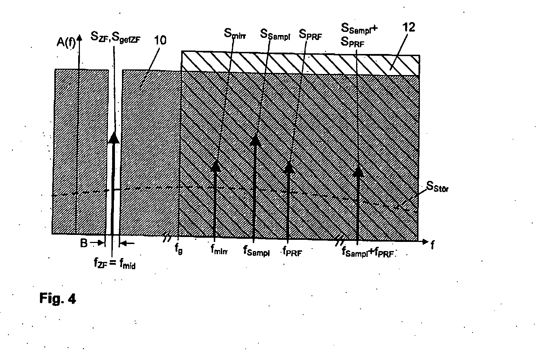

In Fig. 1 ist ein erstes Ausführungsbeispiel eines Blockschaltbilds des erfindungsgemäßen Verfahrens zur Ermittlung der Distanz d bzw. des Füllstands e anhand der Laufzeit t aufgezeigt. In einem ersten Verfahrensschritt T1 wird ein mit einem Hochfrequenzsignal $S_{HF}$ geträgertes, gepulstes Sendesignal $S_{TX}$, welches durch ein Pulsrepetiersignal $S_{PRF}$ mit einer Pulsrepetierfrequenz $f_{PRF}$ getriggert wird, erzeugt. In einem zweiten Verfahrensschritt T2 wird ein mit ein entsprechendes Abtastsignal $S_{Sampl}$ mit einer Abtastfrequenz $f_{Sampl}$, welche eine Differenzfrequenz $f_{Diff}$ zu der Pulsrepetierfrequenz $f_{PRF}$ aufweist, jedoch mit dem selbigen Hochfrequenzsignal $S_{HF}$ geträgert ist, erzeugt. Im dritten Verfahrensschritt T3 wird das Sendesignal $S_{TX}$ ausgesendet und zumindest ein an einer Oberfläche 3a des Füllguts 3 reflektierte Reflexionsmesssignal $S_{RX}$ empfangen. Diesem Reflexionsmesssignal $S_{RX}$ kann durch die zuvor erwähnten Einflüsse ein Störsignal $S_{Stör}$ überlagert sein. Durch eine sequentielle Abtastung in dem vierten Verfahrensschritt T4 wird, beispielsweise durch eine Mischung oder Abtastung mit einem Abtastsignal $S_{Sampl}$ durch eine Abtastschaltung 23, aus der Signalsumme $S_{RX} + S_{TX}$ ein zeitgedehntes Zwischenfrequenzsignal $S_{ZF}$ mit einer Zwischenfrequenz $f_{ZF}$ erzeugt. Dieses zeitgedehnte Zwischenfrequenzsignal $S_{ZF}$ wird in einem fünften Verfahrensschritt T5 gefiltert, wodurch Störsignale $S_{Stör}$, die ferner auch durch den Abtastvorgang selbst erzeugt werden, aus dem Zwischenfrequenzsignal $S_{ZF}$ entfernt werden und ein nahezu störsignalfreies gefiltertes Zwischenfrequenzsignal $S_{gefZF}$ mit der gleichen Zwischenfrequenz $f_{ZF}$ erzeugt wird. Im sechsten Verfahrensschritt T6 wird ereignisgesteuert oder periodisch ein Abfragemodus bzw. Testmodus eingeleitet, ob eine Signalstärke P, die aus dem gefiltertes Zwischenfrequenzsignal $S_{gefZF}$ ermittelt wird, maximal ist. Ein Ereignis, das diesen Verfahrenschritt T6 bzw. diesen Abfragemodus auslöst, ist beispielsweise eine Messsignalamplitude bzw. Signalstärke P, die unterhalb eines vorbestimmten Grenzwerts zu liegen kommt, ein Wechsel des Mediums bzw. des Füllgut 3 im Behälter oder eine Füllstandsänderung. Die Ermittlung der Signalstärke P aus dem gefilterten Zwischenfrequenzsignal $S_{gefZF}$ erfolgt beispielsweise demgemäß, indem die Amplitude des Füllstandsechos, ein Integral über alle Stützpunkte des gefilterten Zwischenfrequenzsignals $S_{gefZF}$ oder durch einen Algorithmus aus dem gefilterten Zwischenfrequenzsignal $S_{gefZF}$ bestimmt wird. Es sind auch andere Bewertungskriterien der Signalstärke P des gefilterten Zwischenfrequenzsignals $S_{gefZF}$ anwendbar, die hier nicht explizit aufgeführt sind, und desweitern ist auch eine Phasen- oder Frequenzauswertung des gefilterten Zwischenfrequenzsignals $S_{gefzF}$ zur Bewertung ausführbar. In diesem Abfragemodus oder Testmodus wird beispielsweise ermittelt ob, die Signalstärke P maximal ist. Denn liegt die Zwischenfrequenz $f_{ZF}$ nicht im Nahbereich der Mittenfrequenz $f_{mid}$ des schmalbandigen Bandpasses 10 oder ist diese nicht kleiner als die Grenzfrequenz $f_g$ des Tiefpasses 12 in der Filter-/Verstärkereinheit 9, wie auch in Fig. 4 bildlich dargestellt, so wird auch das Zwischenfrequenzsignal $S_{ZF}$ mit der Zwischenfrequenz $f_{ZF}$ teilweise oder ganz durch die Filter 10, 12 in der Signalstärke P gedämpft bzw. unterdrückt. Ist die Signalstärke P des gefilterten Zwischenfrequenzsignals $S_{gefZF}$ nicht maximal, so wird beispielsweise nach einem Optimierungsverfahren, einem Nährungsverfahren bzw. einem Iterationsverfahren die Differenzfrequenz $f_{Diff}$ bzw. die Abtastfrequenz $f_{Sampl}$ solange geändert, bis ein Maxima gefunden ist. Ist die maximale Signalstärke P des gefilterten Zwischenfrequenzsignals $S_{getZF}$ bei einer bestimmten Zwischenfrequenz $f_{ZF}$ erreicht, so wird in einem siebten Verfahrensschritt T7 der Transformationsfaktor $K_T$ aus der Differenzfrequenz $f_{Diff}$ und der Pulsrepetierfrequenz $f_{PRF}$ ermittelt. In einem achten Verfahrensschritt T8 wird das maximierte, gefilterte Zwischenfrequenzsignal $S_{gefZF}$ unter Berücksichtigung der Zeitdehnung bzw. des Transformationsfaktors $K_T$ ausgewertet und die Laufzeit t einer Impulsfolge bzw. Burstfolge aus dem Sendesignal $S_{TX}$ und dem Reflexionsmesssignal $S_{RX}$ ermittelt. Es ist auch möglich, dass der achte Verfahrensschritt T8 in jedem Messzyklus ausgeführt wird, ohne dass der beispielsweise iterative Regelprozess zur Ermittlung der maximalen Signalstärke P bzw. Abstimmung der Zwischenfrequenz $f_{ZF}$ auf die Filtercharakteristik der Filter 10, 12 erfolgreich abgeschlossen ist. Aus der Laufzeit t lässt sich mit Kenntnis der Ausbreitungsgeschwindigkeit des Sendesignals $S_{TX}$ und Reflexionsmesssignals $S_{RX}$ die Distanz d und somit bei Kenntnis der Höhe h eines offenen oder geschlossenen Raumsystem 4, z.B. eines Behälters, der Füllstand e eines Füllguts 3 bestimmen.

Das erfindungsgemäße Verfahren ist nicht nur auf ein Laufzeitmessverfahren mit gepulsten Messsignalen S beschränkt, sondern dieses Verfahren kann auch allgemein für die Anpassung der Frequenz des Ausgangssignals eines Mischers 13, 24 bzw. Abtastschaltung 23 auf die Grenzfrequenz $f_g$ oder die Mittenfrequenz $f_{mid}$ der nachfolgende oder davor geschalteten Filter-/Verstärkereinheit 9 eingesetzt werden. Unter dem Oberbegriff Messsignalen S sind die Sende- $S_{TX}$ und Reflexionssignale $S_{RX}$, die insbesondere anteilig aus den Pulsrepetiersignalen $S_{PRF}$, den Abtastsignalen $S_{Sampl}$ und den Trägersignalen bzw. Hochfrequenzsignalen $S_{HF}$ zusammengesetzt sind, sowie auch die Abtastsignal $S_{Sampl}$, Differenzsignal $S_{Diff}$ zur signaltechnischen Weiterverarbeitung zusammengefasst.

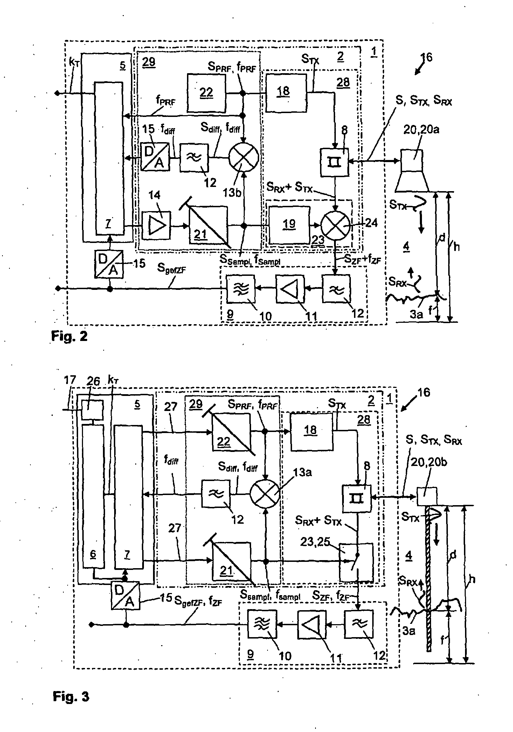

In Fig. 2 und Fig. 3 sind Ausführungsbeispiele eines mit hochfrequenten Messsignalen S, insbesondere mit Mikrowellen, arbeitenden Messgeräts 16 dargestellt, das in einem offenen oder geschlossenen Raumsystem 4, insbesondere einem Behälter, den Füllstand e eines Füllguts 3 bestimmt.

Das Messgerät 16 dient dazu, einen bestimmten Füllstand e des Füllguts 3 in dem offenen oder geschlossenen Raumsystem 4, insbesondere in dem Behälter, basierend auf dem Pulsradar-Verfahren zu ermitteln und mittels einer entsprechenden digitalen Verarbeitungseinheit 5, insbesondere einem Mikrocontroller 5, einen diesen Füllstand e gegenwärtig repräsentierenden, z.B. digitalen, Messwert M zu liefern.

Dazu weist das Messgerät 16 ein, vornehmlich mit der Messelektronik 1 verbundenes, Wandlerelement 20 auf, mittels dem das Hochfrequenzsignal $S_{HF}$ bzw. das Trägersignal geträgerte und im Vergleich dazu niederfrequenter gepulste elektromagnetische Sendesignal $S_{TX}$ in ein das Füllgut 3 umfassendes Messvolumen eingekoppelt und, insbesondere in Richtung des Füllguts 3, ausgesendet wird. Die mittlere Hochfrequenz $f_{HF}$ des Hochfrequenzsignals $S_{HF}$ bzw. des gepulsten Sendesignals $S_{TX}$ liegt hier, wie bei derartigen mit Mikrowellen arbeitenden Messgeräten 16 üblich, in einem Frequenzbereich von einigen Gigahertz, insbesondere im Frequenzbereich von 0.5 GHz bis 30 GHz.

Das Wandlerelement 20 kann z.B., wie in Fig. 2 dargestellt, als eine Antenne 20a und insbesondere als eine Hornantenne, eine Stabantenne, eine Parabolantenne oder auch eine Planarantenne, ausgestaltet sein, die als Sendesignal $S_{TX}$ dienende elektromagnetische hochfrequente Wellen, z.B. Mikrowellen, abstrahlt. Anstelle solcher Freiraumwellen-Strahler können, wie in Fig. 3 gezeigt, aber z.B. auch auf Wellenleiter 20b geführte Oberflächenwellen zur Füllstandsmessung verwendet werden. Bei dieser Methode der geführten Mikrowelle, Zeitbereichreflektometrie bzw. der TDR-Messmethode (Time Domain Reflection) wird beispielsweise ein Hochfrequenzimpuls entlang eines Sommerfeldschen oder Goubauschen Wellenleiters oder Koaxialwellenleiters ausgesendet, welcher bei einer Diskontinuität des DK-Wertes (Dielektrizitätskonstanten) des den Wellenleiter umgebenden Mediums teilweise zurückreflektiert wird.

Aufgrund von Impedanzsprüngen innerhalb des Messvolumens des offenen oder geschlossenen Raumsystems 4 bzw. Behälters, insbesondere an der Oberfläche 3a des Füllguts 3, wird das Sendesignal $S_{TX}$ zumindest teilweise reflektiert und somit in entsprechende Reflexionsmesssignale $S_{RX}$ umgewandelt, die in Richtung des Wandlerelements 20 zurücklaufen und von diesem empfangen werden.

Eine an das Wandlerelement 20 angekoppelte Sende-/ Empfangseinheit 2 dient dazu, leitungsgeführte und zueinander kohärente Wellenpakete von vorgebbarer Pulsform und Pulsweite, so genannte Bursts, zu erzeugen und zu verarbeiten, sowie mittels der Bursts ein von dem Füllstand e beeinflusstes, analoges zeitgedehntes Zwischenfrequenzsignal $S_{ZF}$ zu generieren. Die Pulsform eines einzelnen Bursts entspricht üblicherweise nadelförmigen oder sinusoiden, halbwellenförmigen Impulsen von vorgebbarer Pulsweite; es können hier aber auch, falls erforderlich, andere geeignete Pulsformen für die Bursts verwendet werden.

Die Messelektronik 1 setzt sich hauptsächlich aus zumindest einer Sende-/Empfangseinheit 2, digitale Verarbeitungseinheit 5, einer Filter-/Verstärkereinheit 9 zusammen. Die Sende-/Empfangseinheit 2 lässt sich wiederum in einen HF-Schaltungsteil 28, in dem hauptsächlich HF-Signale erzeugt und verarbeitet werden, und einem NF-Schaltungsteil 29, in dem hauptsächlich NF-Signale erzeugt und verarbeitet werden, einteilen. Die einzelnen Schaltungselemente im HF-Schaltungsteil 28 sind erfahrungsgemäß in analoger Schaltungstechnik aufgebaut, d.h. es werden analoge Messsignale S erzeugt und verarbeitet. Dahingegen können die einzelnen Schaltungselementen im NF-Schaltungsteil 29 entweder auf der Basis von digitaler Schaltungstechnik und/oder analoger Schaltungstechnik aufgebaut sein. Unter dem Gesichtspunkt des rasanten Fortschritts der digitalen Signalverarbeitung ist es auch denkbar den HF-Bereich mit digitalen Schaltungselementen auszuführen. Es sind auch die verschiedensten Variationen der einzelnen Schaltungselemente in digitaler und analoger Schaltungstechnik denkbar, die hier nicht explizit ausgeführt werden können. Deshalb ist die nachfolgende Beschreibung einer Ausführungsform nur als ein Beispiel aus vielen möglichen Ausführungsmöglichkeiten anzusehen.

Die Sende-/Empfangseinheit 2 umfasst gemäß Fig. 2 und 3 einen elektronischen Sendeimpulsgenerator 18 zum Erzeugen einer als ein Sendesignal $S_{TX}$ dienenden ersten Burstfolge. Das Sendesignal $S_{TX}$ ist, wie bei derartigen Messgeräten 16 üblich, mit einer mittleren Hochfrequenz $f_{HF}$ geträgert, die in etwa im Bereich zwischen 0.5 und 30 GHz liegt, und mit einer Pulsrepetierfrequenz $f_{PRF}$ bzw. Schussrate getaktet, die auf einen Frequenzbereich von einigen Megahertz, insbesondere einen Frequenzbereich von 1 MHz bis 10 MHz, eingestellt ist. Diese Pulsrepetierfrequenz $f_{PRF}$ zum Ansteuern des Sendeimpulsgenerators 18 wird von einem Sendetaktoszillator 22 erzeugt. Die Hochfrequenz $f_{HF}$ und/oder Pulsrepetierfrequenz $f_{PRF}$ können aber auch, falls erforderlich, oberhalb der jeweils angegebenen Frequenzbereiche liegen.

Das an dem Signalausgang des Sendeimpulsgenerators 18 anliegende Sendesignal $S_{TX}$ wird mittels einer Sende-/Empfangsweiche 8, insbesondere mittels eines Richtkopplers oder Hybrid-Kopplers, der Sende-/Empfangseinheit 2 in das an einem ersten Signalausgang der Sende-/Empfangsweiche 8 angeschlossene Wandlerelement 20 eingekoppelt. Praktisch gleichzeitig liegt das Sendesignal $S_{TX}$ außerdem an dem zweiten Signalausgang der Sende-/Empfangsweiche 8 an. Der Sendeimpulsgenerators 18 und der Abtastimpulsgenerator 19 sind als gewöhnliche analoge HF-Oszillatoren, z.B. Quarz-Oszillatoren, rückgekoppelte Oszillatoren oder Akustische Oberflächenwellenfilter (SAW), ausgeführt.

Die in der oben beschriebenen Art und Weise im Messvolumen des offenen oder geschlossenen Raumsystems 4 erzeugten Reflexionsmesssignale $S_{RX}$ werden, wie bereits erwähnt, vom Messgerät 16 mittels des Wandlerelements 20 wieder empfangen und am zweiten Signalausgang der Sende-/Empfangsweiche 8 ausgekoppelt. Dementsprechend ist am zweiten Signalausgang der Sende-/Empfangsweiche 8 eine mittels des Sendesignals $S_{TX}$ und des Reflexionsmesssignals $S_{RX}$ gebildete Signalsumme $S_{TX} + S_{RX}$ abgreifbar.

Aufgrund dessen, dass die Hochfrequenz $f_{HF}$

und/oder die Pulsrepetierfrequenz $f_{PRF}$ des Sendesignals $S_{TX}$, wie bei solchen Messgeräten 16 üblich, so hoch eingestellt ist, dass ein direktes Auswerten der am zweiten Signalausgang des Sende-/Empfangsweiche 8 anliegenden Signalsumme $S_{TX}+S_{RX}$, insbesondere ein direktes Messen der Laufzeit t, praktisch nicht mehr oder nur mit einem hohen technischen Aufwand, z.B. Einsatz von Hochfrequenzelektronik-Bauteilen, möglich wäre, umfasst die Sende-/Empfangseinheit 8 ferner eine Abtastschaltung 23, die dazu dient, die hochfrequent geträgerte Signalsumme $S_{TX}+S_{RX}$ zeitlich zu dehnen, und zwar so, dass die Hochfrequenz $S_{HF}$ und die Pulsrepetierfrequenz $f_{PRF}$ in einen niedrigeren Frequenzbereich von einigen Kilohertz verschoben werden.

Zum zeitlichen Dehnen der Signalsumme $S_{TX}+S_{RX}$ wird diese einem mit dem zweiten Signalausgang des Sende-/Empfangsweiche 8 verbundenen ersten Signaleingang der Abtastschaltung 23 zugeführt. Gleichzeitig mit der Signal summe $S_{TX}+S_{RX}$ ist einem zweiten Signaleingang der Abtastschaltung 23 eine als ein Abtastsignal $S_{Sampl}$ dienende Burstfolge angelegt. Eine Abtastfrequenz $f_{Sampl}$ bzw. Taktrate, mit der das Abtastsignal $S_{Sampl}$ getaktet ist, ist dabei etwas kleiner eingestellt als die Pulsrepetierfrequenz $f_{PRF}$ des Sendesignals $S_{TX}$.

Mittels der Abtastschaltung 23 wird die Signalsumme $S_{TX}+S_{RX}$ auf ein Zwischenfrequenzsignal $S_{ZF}$ abgebildet, das um einen Transformationsfaktor $K_T$ gegenüber der Signalsumme $S_{TX}+S_{RX}$ zeitlich gedehnt und dementsprechend niederfrequent ist. Der Transformationsfaktor $K_T$ bzw. der Zeitdehnungsfaktor entspricht, wie in Gleichung Gl. 1 ersichtlich, dabei einem Quotienten der Pulsrepetierfrequenz $f_{PRF}$ des Sendesignals $S_{TX}$ geteilt durch eine Differenz der Pulsrepetierfrequenz $f_{PRF}$ des Sendesignal $S_{TX}$ und der Abtastfrequenz $f_{Sampl}$ des Abtastsignals $S_{Sampl}$.

$$K_T = \frac{f_{PRF}}{f_{Diff}} = \frac{f_{PRF}}{f_{PRF} - f_{Sampl}} \hat{=} \frac{f_{IIF}}{f_{ZF}}$$

(Gl. 1)

Eine Zwischenfrequenz $f_{ZF}$ des so erzeugten Zwischenfrequenzsignals $S_{ZF}$ liegt bei derartigen Messgeräten 16 zur Ermittlung des Füllstands e üblicherweise in einem Frequenzbereich von 50 bis 200 kHz; falls erforderlich kann der Frequenzbereich aber auch höher oder niedriger gewählt werden. A priori wurde nach einem alten Verfahren in den Messgeräten 16 der Anmelderin die Zwischenfrequenz $f_{ZF}$ auf ca. 160 kHz fest eingestellt und die Filter-/Verstärkereinheit 9 über frequenzvariable Bauteile, z.B. Drehspulen, darauf abgestimmt. Die Abhängigkeit der Zwischenfrequenz $f_{ZF}$ von dem Verhältnis von Abtastfrequenz $f_{Sampl}$ und Pulsrepetierfrequenz $f_{PRF}$, wie in Gleichung Gl. 2 gezeigt, lässt sich aus Gleichung Gl. 1 herleiten.

$$f_{ZF} = f_{IIF} \cdot \left( 1 - \frac{f_{Sampl}}{f_{PRF}} \right)$$

(Gl. 2)

Im Ausführungsbeispiel der Mischelektronik 1 in Fig. 2 wird als Abtastschaltung 23 ein Abtastmischer 24 verwendet. Bei dem Abtastmischer 24 ergibt sich das Ausgangssignal aus einer Multiplikation der beiden Eingangssignale, wobei die Eingangssignale bei einer unbalancierten bzw. nicht idealen Mischbedingung gleichfalls anteilig im Ausgangssignal zu finden sind. Das Ausgangssignal des Abtastmischers 24 enthält demzufolge harmonische Anteile sowohl bei einem ganzahligen Vielfachen der Differenz als auch bei der Summe der Frequenzen der Eingangssignale. Ein realer Mischer fügt den Eingangssignalen ein zusätzliches Rauschsignal hinzu. Aus diesen Gründen wird insbesondere versucht, das so genannten Spiegelfrequenzsignal $S_{mir}$, das Abtastsummensignals $S_{Sampl}+S_{PRF}$, deren Harmonischen Frequenzanteile und/oder Rauschsignale $S_{Stör}$ durch einen vor- oder nachgeschalteten frequenzselektiven Filter oder durch den Einsatz eines Spiegelselektionsmischers zu unterdrücken. Durch die Beschränkung auf eine bestimmte schmale Bandbreite, z.B. B = 5 - 20 kHz, des Mischers kann eine bessere Optimierung bezüglich Gewinn, Rauschen oder Linearität erfolgen.

In diesem Ausführungsbeispiel in Fig. 2 triggert das Abtastsignal $S_{Sampl}$ des Abtasttaktoszillators 21 einen Abtastpulsgenerator 19, dessen Ausgangssignal kohärent zu dem Hochfrequenzsignal $S_{HF}$ des Sendesignal $S_{TX}$ ist. Dieses Wellenpaket bzw. Signalburst des Sendesignals $S_{TX}$ und des Abtastsignals $S_{Sampl}$ werden mit dem selben oder aber zwei kohärenten Hochfrequenzsignalen $S_{HF}$ geträgert und unterscheiden sich nur dadurch, dass die Pulsreptierfrequenz $f_{PRF}$ und die Abtastfrequenz $f_{Sampl}$ geringfügig verschieden sind. Das mit der Hochfrequenzsignal $S_{HF}$ geträgerte Abtastsignal $S_{Sampl}$ wird mit der Signalsumme $S_{TX}+S_{RX}$ amplitudenmoduliert und anschließend mit einem Tiefpass 12 gefiltert. Durch die Filterung des Zwischenfrequenzsignals $S_{ZF}$ durch einen Tiefpass 12 werden die höherfrequenten Signalanteile, z.B. Spiegelfrequenzsignale $S_{mir}$, Abtastsummensignale $S_{Sampl}+S_{PRF}$ und/oder Rauschsignale $S_{Stör}$, die beispielsweise auch durch den Misch- bzw. Abtastvorgang entstanden sind, herausgefiltert.

Im Ausführungsbeispiel der Messelektronik 1 in Fig. 3 wird als Abtastschaltung 23 ein Abtastschalter 25, insbesondere schnelle Halbleiter-Transistoren oder schnelle Dioden verwendet. Die Abtastschalter 25 aus HF-Dioden haben besonders den Vorteil, dass diese äußerst kurze Schaltzeiten bis in den Pikosekundenbereich besitzen, die sie für die Anwendungen im Hochfrequenzbereich prädestinieren. Als schnelle Transistoren kommen beispielsweise GaAs-MESFET, Hetero-Bipolar-Transistoren (HBT) zum Einsatz, außerdem werden als HF-Dioden beispielsweise schnelle Schottkey-Dioden verwendet. Es ist jedoch jedes andere Bauteil das im HF-Bereich eingesetzt werden kann, einsetzbar.

Dieser Abtastschalter 25 tastet aufgrund des Frequenzversatzes zwischen der Pulsreptierfrequenz $f_{PRF}$ und der Abtastfrequenz $f_{Sampl}$ das Sendesignal $S_{TX}$ in jeder Periode bei unterschiedlicher Phasenlage ab, wodurch ein zeitgedehntes Zwischenfrequenzsignal $S_{ZF}$ mit dem zuvor beschriebenen Transformationsfaktor KT entsteht. Beim Abtastschalter 25 wird ein schnelles, prellfreies, elektrisches Schaltelement, in sbesondere eine HF-Diode oder ein HF-Transistor, eingesetzt, wobei gegenüber dem Abtastmischer 24 durch den Schaltvorgang ein stärkeres Störsignal $S_{Stör}$ bzw. Rauschen zu erwarten ist.

Selbstverständlich wird auch, falls erforderlich, das Zwischenfrequenzsignal $S_{ZF}$, das gegenüber der Signalsumme $S_{TX}+S_{RX}$ um einen Transformationsfaktor $K_T$ zeitgedehnt ist in geeigneter Weise durch einen Signalverstärker 11 vorverstärkt und kann somit in seinem Signalverlauf und in seiner Signalstärke P an nachfolgende Steuer-/Regeleinheiten 7 und/oder Auswerteeinheiten 6 angepasst werden.

Zum Ansteuern der Sende-/Empfangseinheit 2 und zum Erzeugen des Messwerts des Füllstands M aus dem Zwischenfrequenzsignal $S_{ZF}$ umfasst das Messgerät 16 ferner eine Auswerteeinheit 6, die ebenfalls in der digitalen Verarbeitungseinheit 5 der Messelektronik 1, wie in Fig. 3 ersichtlich, untergebracht sein kann.

Die zuvor beschrieben Differenzfrequenz $f_{Diff}$, die sich aus dem Unterschied von der Pulsrepetierfrequenz $f_{PRF}$ und der Abtastfrequenz $f_{Sampl}$ ergibt, wird in Fig. 2 und 3 durch einen Frequenzumsetzer 13 bzw. Mischer ermittelt. Der Frequenzumsetzer 13 bzw. Mischer kann entweder als digitaler Mischer 13a, insbesondere als ein XOR-Logikbaustein oder ein D-FlipFlop zum mischen digitaler Messsignale S, ausgeführt sein oder als ein analoger Mischer 13b insbesondere als ein Diodenringmischer oder allgemein ein Multiplizierer, zum Mischen von analogen Messsignalen S ausgestaltet sein. Diese Differenzfrequenz $f_{Diff}$ wird aus zwei Gründen bestimmt; erstens wird durch diesen Regelkreis die Ansteuerung und Triggerung des Abtasttaktoszillator 21 und gegebenenfalls auch des Sendetaktoszillator 22 durch die Steuer-/Regeleinheit 7 überprüft und zweitens wird aus dem Quotienten der bekannten oder gemessenen Pulsrepetierfreqeunz $f_{PRF}$ und der Differenzfrequenz $f_{Diff}$ der Transformationsfaktor $K_T$ in der Steuer-/Regeleinheit 7 ermittelt. Der Abtasttaktoszillator 21 und gegebenenfalls auch der Sendetaktoszillator 22 sind steuerbar ausgeführt. Als steuerbare bzw. abstimmbare Oszillatoren 21, 22 im NF-Schaltungsteil 29 können beispielsweise spannungsgesteuerte Oszillatoren VCO oder digital bzw. numerisch gesteuerte Oszillatoren, z.B. NCO, eingesetzt werden. Die spannungsgesteuerten Oszillatoren VCO können über Treiber 14 von der Steuer-/Regeleinheit 7 angesteuert werden. Bei einem Einsatz von digitalen bzw. numerisch gesteuerten Oszillatoren, z.B. NCO , werden diese direkt über eine Ansteuerungsleitung oder einen parallelen Ansteuerungsbus 27 von der Steuer-/Regeleinheit 7 mit digitalen Werten angesteuert. Bei einem Einsatz von digital arbeitenden Abtasttaktoszillatoren 21 und/oder digital arbeitenden Sendetaktoszillatoren 22, wie beispielsweise in Fig. 3 gezeigt, ist die Ermittlung der Differenzfrequenz $f_{Diff}$ aus der Pulsrepetierfrequenz $f_{PRF}$ und der Abtastfrequenz $f_{Sampl}$ nicht zwingend notwendig, da die digitale Erzeugung von Frequenzen beispielsweise über einen Zähler erfolgt, der über ein ganzzahliges Teilerverhältnis der Eingangssignale zu den Rückkoppelsignalen oder über Puls-Pausen-Verhältnis des Digitalsignals eingestellt wird. Da diese digitalen Regelkreise sich selbst regeln und die stabile gewünschte Frequenz bekannt ist, kann auf die Ermittlung der Differenzfrequenz $f_{Diff}$ durch einen Mischvorgang prinzipiell verzichtet werden.

Als Beispiel für ein solchen digitalen phasengekoppelter Regelkreis ist ein Phase-Locked-Loop bzw. PLL zu nennen, dessen z.B. freilaufender spannungsgeregelter Oszillator (VCO), wird durch einen meist einstellbaren Teiler auf eine feste erste Vergleichsfrequenz heruntergeteilt. Der Phasenunterschied zwischen der vom VCO abgeleiteten ersten Vergleichsfrequenz und einer zweiten, meist quarzgesteuerten, hochkonstanten Vergleichsfrequenz, die z.B. auch über die Ansteuerungsleitung oder -bus 27 übertragen und von der digitalen Verarbeitungseinheit 5 erzeugt und aufgeschaltet werden kann, wird in einem Phasenvergleicher ermittelt und als Regelspannung wieder dem freilaufenden spannungsgeregelten Oszillator zugeführt. Dadurch wird die Frequenz des freilaufenden spannungsgeregelten Oszillators akkurat auf das im Teiler eingestellte ganzzahlige Vielfache der zweiten hochkonstanten Vergleichsfrequenz geregelt. Diese PLL-Bauteile haben nur den Nachteil, dass Ihre Stromverbrauch sehr hoch ist und somit für ein Niederenergie Zweileitergerät nicht verwendet werden können.

Die D/A-Wandler bzw. A/D-Wandler 15 in den Fig. 2 und Fig. 3 dienen dazu die analoge Signale, z.B. gefilterte Zwischenfrequenzsignal $S_{gefZF}$, Differenzsignal $S_{diff}$, mit den entsprechenden Frequenzwerten, z.B. Zwischenfrequenz $f_{ZF}$, Differenzfrequenz $f_{diff}$ , zu digitalisieren und umzusetzen bzw. zu verstärken, so dass die nachgeschaltete digitale Steuer-/Regeleinheit 7, die beispielsweise ein integraler Teil einer digitalen Verarbeitungseinheit 5 bzw. eines Mikrocontrollers 5 ist, diese Werte erfassen und verarbeiten kann. Besonders das gefilterten Zwischenfrequenzsignals $S_{gefZF}$, das das durch die Filter-/Verstärkereinheit 9 gefilterte und modifizierte Zwischenfrequenzsignal $S_{ZF}$ darstellt, wird derart diskretisiert , digitalisiert und abgespeichert, dass zur weiteren Ermittlung des Messwerts des Füllstands M in einer nachgeschalteten Auswerteeinheit 6 sowohl eine Amplituden- als auch eine Phaseninformation des Zwischenfrequenzsignals $S_{ZF}$, sowie dessen Transformationsfaktor $K_T$ bzw. Zeitdehnungsfaktor, als digitaler Wert zur Verfügung steht. In der Steuer-/Regeleinheit 7 wird aus dem digitalisierten, gefilterten Zwischenfrequenzsignal $S_{gefZF}$ die schon zuvor beschrieben Signalstärke P bestimmt. Mit der Ermittlung dieser Signalstärke P aus dem gefilterten Zwischenfrequenzsignal $S_{gefZF}$ durch die Steuer-/Regeleinheit 7 und der Einstellmöglichkeit der Zwischenfrequenz $f_{ZF}$ bzw. Differenzfrequenz $f_{Diff}$ mittels Ansteuerung zumindest eines Oszillators 21, 22 durch die Steuer-/Regeleinheit 7 ist ein Regelsystem aufgebaut worden, das die Zwischenfrequenz $f_{ZF}$ auf die Filtercharakteristik der Filter-/Verstärkereinheit 9 anpasst und somit immer das optimierte, analoge, gefilterten Zwischenfrequenzsignals $S_{gefZF}$, das so wenig wie nötig durch die Filter-/Verstärkereinheit 9 gedämpft oder verändert wird, am ersten Ausgang der Messelektronik 1 anliegt. Am zweiten Ausgang der Messelektronik 1 wird zur weiteren Verarbeitung des analogen, gefilterten Zwischenfrequenzsignals $S_{gefZF}$ der Zeitdehnungsfaktor bzw. der Transformationsfaktor $K_T$ in nachfolgender Auswerteeinheit 6 übermittelt.

Wie in Fig. 3 ersichtlich kann auch die Auswerteeinheit 6 und gegebenenfalls eine Busschnittstelle 26 in der digitalen Verarbeitungseinheit 5 integriert sein, so dass das Messgerät 16 durch einen Feldbus 17 über die Busschnittstelle 26 mit weiteren Messgeräten 16 oder einer entfernten Kontrollstelle kommuniziert. In der Auswerteeinheit 6 wird die digitalisierte, gefilterte Zwischenfrequenzsignal $S_{gefZF}$ durch eine Signalverarbeitung und Signalauswertungsalgorithmen weiter verarbeitet und es wird die Laufzeit t bzw. der Füllstand e bestimmt. Eine zusätzliche Leitung zur Energieversorgung des Messgerätes 16 entfällt, wenn es sich bei dem Messgerät 16 um ein so genanntes Zweileiter-Messgerät handelt, dessen Kommunikation und Energieversorgung über den Feldbus 17 ausschließlich und gleichzeitig über eine Zweidrahtleitung erfolgt. Die Datenübertragung bzw. Kommunikation über den Feldbus 17 erfolgt beispielsweise nach dem CAN-, HART-, PROFIBUS DP-, PROFIBUS FMS-, PROFIBUS PA-, oder FOUNDATION FIELDBUS- Standard.

Vor der Analog-Digital-Umsetzung sind zu diesem Zweck die Messsignale S, z.B. gefiltertes Zwischenfrequenzsignal $S_{gefZF}$, Differenzsignal $S_{diff}$, mit den entsprechenden Frequenzwerten, z.B. Zwischenfrequenz $f_{ZF}$, Differenzfrequenz $f_{diff}$, der Steuer-/Regeleinheit 7, wie in Fig. 2 und Fig. 3 schematisch dargestellt, bevorzugt über einen Tiefpass 12, z.B. einen passiven oder einen aktiven RC-Filter von vorgebbarer Filterordnung und von einstellbarer Grenzfrequenz $f_g$ zugeführt. Der Tiefpass 12 dient dazu, diese Messsignale S zur Vermeidung von Aliasing-Fehlern im Band zu begrenzen und somit eine einwandfreie Digitalisierung zu ermöglichen. Die Grenzfrequenz $f_g$ ist gemäß dem bekannten Nyquist-Abtasttheorem eingestellt, mit der der durchgelassene Anteil der analogen Messsignale S abgetastet und diskretisiert wird.

Für den Fall, dass der verwendete A/D-Wandler 15 zum Umformen von ausschließlich positiven Signaleingangswerten vorgesehen ist, ist beispielsweise eine Referenzspannung des A/D-Wandlers 15 entsprechend so einzustellen, dass ein zu erwartender minimaler Signaleingangswert des A/D-Wandlers 15, z.B. das gefilterten Zwischenfrequenzsignals $S_{gefZF}$, wenigstens ein Bit, insbesondere das höchste signifikante Bit (MSB) setzt.

Die Sendetaktoszilatoren 21 und/oder für den Abtasttaktoszilatoren 22 können, wie in der Fig. 3 explizit gezeigt, beispielsweise als spannungsgesteuerte Oszillatoren VCO oder digital bzw. numerisch gesteuerten Oszillatoren NCO, z.B. AD7008 von Analog Devices, ausgestaltet sein. Die Steuer-/Regeleinheit 7 steuert diese digitalen Oszillatoren direkt an, indem beispielsweise ein entsprechender Bitwert mittels der Ansteuerungsleitung bzw. -bus 27 übergeben wird, woraus die spannungsgesteuerten, numerischen und/oder digitalen Oszillatoren das gewünschte Ausgangssignal erzeugen. Diese Ausführungsform ist in der Fig. 3 explizit gezeigt, jedoch kann bei Verwendung von digital oder numerisch Oszillatoren 21 und/oder 22, die auch in der digitalen Verarbeitungseinheit 5 bzw. dem Mikrocontroller integriert sein können, auf die Ermittlung der Differenzfrequenz $f_{Diff}$ der beiden Zweige, dem Sendezweig mit dem Sendesignal $S_{TX}$ und dem Abtastzweig mit dem Abtastsignal $S_{Sampl}$, durch den beispielsweisen Einsatz eines digitalen Frequenzumsetzers bzw. digitalen Mischers 13a verzichtet werden. Durch die Integration der Oszillatoren 21 und/oder 22 in die digitale Verarbeitungseinheit 5 kann die Differenzfrequenz $f_{Diff}$ auch direkt intern ermittelt werden.

Die einzelnen Bereiche der Messelektronik 1, wie Sende-Empfangseinheit mit HF-Schaltungsteil 28 und NF-Schaltungsteil 29, wie digitale Verarbeitungseinheit 5 sowie deren einzelne Zweige und Bauteile, aus der Fig. 2 und Fig. 3 können gegeneinander ausgetauscht werden, so dass eine Vielzahl unterschiedlicher Schaltungsvariationen entsteht.

In Fig. 4 ist das Spektrum des Signals nach der Abtastschaltung 23 gezeigt, welches durch einen Tiefpass 12 und einen Bandpass 10 gefiltert wird. Auf der Abszisse ist die Frequenz f und auf der Ordinate die Signalamplitude A aufgetragen. Durch den Tiefpass 12 werden beispielsweise die Spiegelfrequenzsignale $S_{mir}$, das aufgrund des Einsatzes eines Abtastmischers 24 erzeugte Abtastungssummensignal $S_{Samp}1+S_{PRF}$, das durch einen Mischvorgang auf den Ausgang des Abtastmischers 24 teilweise durch geschaltete Abtastsignal $S_{Sampl}$ und/oder Pulsrepetiersignal $S_{PRF}$ und höherfrequente Frequenzanteile von Mischsignalen aus den obigen Signalanteilen, die das Zwischenfrequenzsignal $S_{ZF}$ überlagern und die größer als die Grenzfrequenz $f_g$ des Tiefpasses 12 sind, unterdrückt. Unter Mischung zweier Messsignale S wird im allgemeinen eine Frequenzumsetzung von einer HF-Frequenz $f_{HF}$ auf eine Zwischenfrequenz $f_{ZF}$ oder auch umgekehrt verstanden.

In der Fig. 4 ist das Spektrum der Modulation bzw. Frequenzmodulation der Pulsrepetierfrequenz $f_{PRF}$ auf eine Trägerfrequenz bzw. Hochfrequenz $f_{HF}$ und das Spektrum der Mischung der Pulsrepetierfrequenz $f_{PRF}$ und der Abtastfrequenz $f_{Sampl}$ aufgezeigt. Auf der Abszisse ist die Frequenz f und auf der Ordinate die Signalamplitude A aufgetragen. Im Idealfall entstehen bei dem Mischvorgang nur Differenzfrequenzen $f_{Diff}$ bzw. Zwischenfrequenzen $f_{ZF}$ und Summenfrequenzen $f_{Sampl}+f_{PRF}$ der in den Mischer 13, 24 eingekoppelten Messsignale S.

Die Spiegelfrequenz $f_{mir}$ ist jene Frequenz, die mit der Abtastfrequenz $f_{Sampl}$ gemischt dieselbe Zwischenfrequenz $f_{ZF}$ am Ausgang des Mischers 13, 24 erzeugt, wie mit der Pulsrepetierfrequenz $f_{PRF}$. Der schmalbandige Bandpass 10 mit Bandbreiten B von beispielsweise B = 5 ...20 kHZ ist dazu eingesetzt worden, die niederfrequenteren Anteile des Rauschsignals bzw. Störsignals $S_{Stör}$ aus dem übrigen Messsignal S heraus zu filtern. Der Bandpass 10 muss deshalb mit Bauteilen von einer entsprechenden Güte ausgestaltet sein. Das Zwischenfrequenzsignal $S_{ZF}$ ist erfindungsgemäß so auf diesen Bandpass 10 abgestimmt, dass die Zwischenfrequenz $f_{ZF}$ und die Mittenfrequenz $f_{mid}$ des Bandpasses 10 gleich ist. Diese Störsignale $S_{Stör}$ werden beispielsweise auch durch das Rauschverhalten des Abtastmischers 24 oder auch besonders durch das hohe Rauschsignal des Abtastschalters 25 beeinflusst und erzeugt. Es können noch weitere Signalanteile und harmonische Frequenzen der zuvor beschriebenen Signalanteile in diesem Spektrum enthalten sein, auf die aber in diesem Rahmen nicht weiter eingegangen wird.

**Bezugszeichenliste**

1. Messelektronik
2. Sende-/Empfangseinheit,
3. Füllgut
   3a. Oberfläche
1. offenes oder geschlossenes Raumsystem
2. digitale Verarbeitungseinheit, Mikrocontroller
3. Auswerteeinheit
4. Steuer-/Regeleinheit
5. Sende-/Empfangsweiche
6. Filter-/Verstärkereinheit
7. Bandpass, Filter
8. Signalverstärker, Treiber
9. Tiefpass, Filter
10. Frequenzumsetzer, Mischer
    13a digitaler Frequenzumsetzer, digitaler Mischer
    13b analoger Frequenzumsetzer, analoger Mischer
1. Signalverstärker, Treiber
2. A/D-Wandler, D/A-Wandler
3. Messgerät, Füllstandsmessgerät
4. Feldbus
5. Sendeimpulsgenerator
6. Abtastimpulsgenerator
7. Wandlerelement,
   20a Antenne
   20b Wellenleiter

1. Abtasttaktoszillator, RXO
2. Sendetaktoszillator, TXO
3. Abtastschaltung
4. Abtastmischer
5. Abtastschalter
6. Busschnittstelle
7. Ansteuerungsleitung, Ansteuerungsbus
8. HF-Schaltungsteil
9. NF-Schaltungsteil

   S Messsignal
   $S_{TX}$ Sendesignal
   $S_{HF}$ Hochfrequenzsignal
   $S_{RX}$ Reflexionsmesssignal
   $S_{TX}+S_{RX}$ Signalsumme
   $S_{ZF}$ Zwischenfrequenzsignal
   $S_{sampl}$ Abtastsignal
   $S_{PRF}$ Pulsrepetiersignal
   $S_{gefZF}$ gefiltertes Zwischenfrequenzsignal
   $S_{diff}$ Differenzsignal
   $S_{Stör}$ Störsignal, Rauschsignal
   $S_{mirr}$ Spiegelfrequenzsignal
   $S_{Sampl}+S_{PRF}$ Abtastungssummensignal
   $f_{diff}$ Differenzfrequenz
   $f_{mirr}$ Spiegelfrequenz
   $f_{PRF}$ Pulsrepetierfrequenz
   $f_{ZF}$ Zwischenfrequenz
   $f_{HF}$ Hochfrequenz
   $f_{sampl}$ Abtastfrequenz
   $f_g$ Grenzfrequenz
   $f_{mid}$ Mittenfrequenz
   B Bandbreite
   $K_T$ Transformationsfaktor
   d Distanz
   h Höhe
   e Füllstand
   t Laufzeit
   A Amplitude
   M Messwert des Füllstands
   T1 erster Verfahrensschritt
   T2 zweiter Verfahrensschritt
   T3 dritter Verfahrensschritt
   T4 vierter Verfahrensschritt
   T5 fünfter Verfahrensschritt
   T6 sechster Verfahrensschritt
   T7 siebter Verfahrensschritt
   T8 achter Verfahrensschritt

**Patentansprüche**

1. Verfahren zur Ermittelung der Distanz (d) anhand der Laufzeit (t) von hochfrequenten Messsignalen (S),

   - wobei zumindest ein mit einer Pulsrepetierfrequenz ($f_{PRF}$) periodisches gepulstes Sendesignal ($S_{TX}$) ausgesendet und zumindest ein Reflexionsmesssignal ($S_{RX}$) empfangen wird,
- wobei das Sendesignal ($S_{TX}$) und das Reflexionsmesssignal ($S_{RX}$) mittels einem mit einer Abtastfrequenz ($f_{sampl}$) erzeugten Abtastsignal ($S_{sampl}$) in ein zeitgedehntes Zwischenfrequenzsignal ($S_{ZF}$) mit einer Zwischenfrequenz ($f_{ZF}$) transformiert werden,

wobei das zeitgedehnte Zwischenfrequenzsignal ($S_{ZF}$) mittels zumindest einem Filter (9) gefiltert wird und ein gefiltertes Zwischenfrequenzsignal ($S_{gefZF}$) erzeugt wird,
**dadurch gekennzeichnet,**
**dass** die Zwischenfrequenz ($f_{ZF}$) auf eine Grenzfrequenz ($f_g$) und/oder eine Mittenfrequenz ($f_{mid}$) des Filters (9) angepasst wird,
**dass** die Anpassung der Zwischenfrequenz ($f_{ZF}$) überprüft wird, indem die Signalstärke (P) des gefilterten Zwischenfrequenzsignals ($S_{gefZF}$) bewertet wird, und
**dass** die Signalstärke (P) des gefilterten Zwischenfrequenzsignals ($S_{gefZF}$) durch einen Algorithmus aus dem gefilterten Zwischenfrequenzsignal ($S_{gefZF}$), durch die Ermittlung der Amplitude des Füllstandsechos und/oder durch die Ermittlung eines Integrals über alle Stützpunkte des gefilterten Zwischenfrequenzsignals ($S_{gefZF}$) bestimmt wird.

2. Laufzeitmessverfahren nach Anspruch 1,
wobei die Zwischenfrequenz ($f_{ZF}$) angepasst wird, indem die Pulsrepetierfrequenz ($f_{PRF}$) und/oder die Abtastfrequenz ($f_{sampl}$) so variiert wird/werden, dass die Differenzfrequenz ($f_{diff}$) zwischen der Pulsrepetierfrequenz ($f_{PRF}$) und der Abtastfrequenz ($f_{sampl}$) verändert wird.

3. Laufzeitmessverfahren nach Anspruch 2,
wobei die Zwischenfrequenz ($f_{ZF}$) angepasst wird, indem die Pulsrepetierfrequenz ($f_{PRF}$) und/oder die Abtastfrequenz ($f_{sampl}$) nach einem iterativen Verfahren variiert werden/wird.

4. Laufzeitmessverfahren nach Anspruch 1, 2, oder 3,
wobei der Regelungsprozess zur Anpassung der Zwischenfrequenz ($f_{ZF}$) periodisch oder ereignisgesteuert eingeleitet wird.

5. Laufzeitmessverfahren nach Anspruch 2,
wobei ein Transformationsfaktor ($K_T$), der dem Zeitdehnungsverhältnis entspricht, aus dem Verhältnis der Pulsrepetierfrequenz ($f_{PRF}$) zu einer Differenzfrequenz ($f_{diff}$) ermittelt wird.

6. Laufzeitmessverfahren nach Anspruch 5,
wobei der Transformationsfaktor ($K_T$) für die weitere Auswertung und Verarbeitung des gefilterten, zeitgedehnten Zwischenfrequenzsignals ($S_{gefZF}$) übermitteln wird.

7. Laufzeitmessverfahren nach Anspruch 1,
wobei Spiegelfrequenzen ($f_{mirr}$) der Zwischenfrequenz ($f_{ZF}$) und/oder das Abtastungssummensignal $S_{Sampl}+S_{PRF}$ durch ein Tiefpass (12; 9) aus dem zeitgedehnten Zwischenfrequenzsignal ($S_{ZF}$) ausgeblendet werden.

8. Laufzeitmessverfahren nach Anspruch 1,
wobei Störsignale ($S_{Stör}$), insbesondere Rauschen, durch einen Bandpass (10; 9) aus dem zeitgedehnten Zwischenfrequenzsignal ($S_{ZF}$) ausgeblendet werden.

## Claims

1. Procedure for determining the distance (d) using the transit time (t) of highfrequency measuring signals (S),

    - wherein at least one transmission signal ($S_{TX}$) which is pulsed periodically at a pulse repetition frequency ($f_{PRF}$) is transmitted and at least one reflection measuring signal ($S_{RX}$) is received,
    - wherein the transmission signal ($S_{TX}$) and the reflection measuring signal ($S_{RX}$) are transformed into a time-expanded intermediate frequency signal ($S_{ZF}$) with an intermediate frequency ($f_{ZF}$) using a sampling signal ($S_{Sampl}$) generated with a sampling frequency ($f_{sampl}$),

wherein the time-expanded intermediate frequency signal ($S_{ZF}$) is filtered using at least one filter (9) and a filtered intermediate frequency signal ($S_{gefZF}$) is generated,
**characterized in that**
the intermediate frequency ($f_{ZF}$) is adapted to a limit frequency ($f_g$) and/or a middle frequency ($f_{mid}$) of the filter (9),
the adaptation of the intermediate frequency ($f_{ZF}$) is checked by evaluating the signal strength (P) of the filtered intermediate frequency signal ($S_{gefZF}$), and the signal strength (P) of the filtered intermediate frequency signal ($S_{gefZF}$) is determined using an algorithm of the filtered intermediate frequency signal ($S_{gefZF}$) by determining the amplitude of the level echo and/or by determining an integral over all the points of the filtered intermediate frequency signal ($S_{gefZF}$).

2. Procedure for measuring the transit time as claimed in Claim 1,
wherein the intermediate frequency ($f_{ZF}$) is adapted by varying the pulse repetition frequency ($f_{PRF}$) and/or the sampling frequency ($f_{sampl}$) in such a way that the differential frequency ($f_{diff}$) between the pulse repetition frequency and the sampling frequency ($f_{sampl}$) is modified.

**3.** Procedure for measuring the transit time as claimed in Claim 2, wherein the intermediate frequency ($f_{ZF}$) is adapted by varying the pulse repetition frequency ($f_{PRF}$) and/or the sampling frequency ($f_{sampl}$) following an iterative procedure.

**4.** Procedure for measuring the transit time as claimed in Claim 1, 2 or 3, wherein the regulation process for adapting the intermediate frequency ($f_{ZF}$) is initiated periodically or by events.

**5.** Procedure for measuring the transit time as claimed in Claim 2, wherein a transformation factor ($K_T$), which corresponds to the time expansion ratio, is determined from the ratio of the pulse repetition frequency ($f_{PRF}$) to a differential frequency ($f_{diff}$).

**6.** Procedure for measuring the transit time as claimed in Claim 5, wherein the transformation factor ($K_T$) is transmitted for the further evaluation and processing of the filtered, time-expanded intermediate frequency signal ($S_{gefZF}$)

**7.** Procedure for measuring the transit time as claimed in Claim 1, wherein image frequencies ($f_{mirr}$) of the intermediate frequency ($f_{ZF}$) and/or the sampling sum signal $S_{Sampl}+S_{PRF}$ are eliminated from the time-expanded intermediate frequency signal ($S_{ZF}$) by a low-pass filter (12, 9).

**8.** Procedure for measuring the transit time as claimed in Claim 1, wherein interference signals ($S_{Stör}$), particularly noise, are eliminated from the time-expanded intermediate frequency signal ($S_{ZF}$) by a bandpass filter (10, 9).

**Revendications**

**1.** Procédé destiné à la détermination de la distance (d) au moyen du temps de propagation (t) de signaux de mesure (S) haute fréquence,

- pour lequel est émis au moins un signal d'émission pulsé ($S_{TX}$) périodique avec une fréquence de répétition des impulsions ($f_{PRF}$), et est reçu au moins un signal de mesure de réflexion ($S_{RX}$),
- pour lequel le signal d'émission ($S_{TX}$) et le signal de mesure de réflexion ($S_{RX}$) sont transformés au moyen d'un signal d'échantillonnage ($S_{Sampl}$) généré avec une fréquence d'échantillonnage ($f_{sampl}$) en un signal de fréquence intermédiaire dilaté dans le temps ($S_{ZF}$),

le signal de fréquence intermédiaire dilaté dans le temps ($S_{ZF}$) étant filtré au moyen d'au moins un filtre (9) et un signal de fréquence intermédiaire filtré ($S_{gefZF}$) étant généré,
**caractérisé**
**en ce que** la fréquence intermédiaire ($f_{ZF}$) est adaptée à une fréquence limite ($f_g$) et/ou à une fréquence centrale ($f_{mid}$) du filtre (9),
**en ce que** l'adaptation de la fréquence intermédiaire ($f_{ZF}$) est contrôlée en ce qu'est évaluée l'intensité du signal (P) du signal de fréquence intermédiaire filtré ($S_{gefZF}$), et
**en ce que** l'intensité du signal (P) du signal de fréquence intermédiaire filtré ($S_{gefZF}$) est déterminée par la détermination de l'amplitude de l'écho de niveau de remplissage et/ou par la détermination d'une intégrale sur l'ensemble des points de linéarisation du signal de fréquence intermédiaire filtré ($S_{gefZF}$).

**2.** Procédé de mesure du temps de propagation selon la revendication 1, pour lequel la fréquence intermédiaire ($f_{ZF}$) est adaptée en ce que la fréquence de répétition des impulsions ($f_{PRF}$) et/ou la fréquence d'échantillonnage ($f_{sampl}$) est/sont variée(s) de telle manière que la fréquence différentielle ($f_{diff}$) entre la fréquence de répétition des impulsions ($f_{PRF}$) et la fréquence d'échantillonnage ($f_{sampl}$) est modifiée.

**3.** Procédé de mesure du temps de propagation selon la revendication 2, pour lequel la fréquence intermédiaire ($f_{ZF}$) est adaptée en ce que la fréquence de répétition des impulsions ($f_{PRF}$) et/ou la fréquence d'échantillonnage ($f_{sampl}$) est/sont variée(s) d'après un procédé itératif.

**4.** Procédé de mesure du temps de propagation selon la revendication 1, 2 ou 3, pour lequel le process de régulation pour l'adaptation de la fréquence intermédiaire ($f_{ZF}$) est déclenché périodiquement ou par événements.

**5.** Procédé de mesure du temps de propagation selon la revendication 2, pour lequel est déterminé un facteur de transformation ($K_T$), qui correspond au rapport de dilatation temporelle, à partir du rapport entre la fréquence de répétition des impulsions ($f_{PRF}$) et une fréquence différentielle ($f_{diff}$).

**6.** Procédé de mesure du temps de propagation selon la revendication 5, pour lequel le facteur de transformation ($K_T$) est transmis pour l'exploitation et le traitement supplémentaires du signal de fréquence intermédiaire filtré et dilaté dans le temps ($S_{gefZF}$).

7.  Procédé de mesure du temps de propagation selon la revendication 1,
    pour lequel des fréquences-images ($f_{mirr}$) de la fréquence intermédiaire ($f_{ZF}$) et/ou le signal de somme d'échantillonnage $S_{Sampl}$+$S_{PRF}$ sont éliminés du signal de fréquence intermédiaire dilaté dans le temps ($S_{ZF}$) au moyen d'un filtre passe-bas (12,9).

8.  Procédé de mesure du temps de propagation selon la revendication 1,
    pour lequel les signaux parasites ($S_{Stör}$), notamment le bruit, sont éliminés du signal de fréquence intermédiaire dilaté dans le temps ($S_{ZF}$) au moyen d'un filtre passe-bande (10, 9).

Fig. 1

Fig. 2

Fig. 3

**Fig. 4**

**EP 1 877 738 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19949992 C2

- US 2002109626 A1